# EUROPEAN PATENT APPLICATION

(11) **EP 4 653 843 A1**
(43) Date of publication of application: **26.11.2025**
(21) Application number: 25178762.8
(22) Date of filing: 26.05.2025
(51) Int. Cl.: G01N 21/15, H05B 3/00, H05B 3/84, B60S 1/00, B60S 1/56, G02B 27/00

(54) **MULTI-FUNCTION OPTICAL SENSOR COVER**

(30) Priority: 24.05.2024 US 202463651484 P
(71) Applicant: Magna International Inc., Aurora, ON L4G 7K1 (CA)
(72) Inventor: Grotendorst, Jörg, 90475 Nürnberg (DE); Knutzen, Julian, Aurora, Ontario, L4G 7K1 (CA); Walia, Parvinder, Shelby Township, 48315 (US); Baltazar y Jimenez, Alexis, Troy, Michigan, 48098 (US)
(74) Representative: Witte, Weller & Partner Patentanwälte mbB

(57) **Abstract**

A sensor assembly for a vehicle including: an optical sensor; a housing defining an interior chamber for holding the optical sensor; and a heated cover attached the housing and enclosing the interior chamber. In some embodiments, the heated cover includes: a substrate overlying the optical sensor; a conductive layer affixed to the substrate and overlying a field-of-view (FOV) of the optical sensor; and a heater wire attached to the substrate and at least partially surrounding the FOV. In some embodiments, each of the substrate and the conductive layer are transparent at a wavelength of light used by the optical sensor.

## Description

### FIELD

The present disclosure relates generally to sensors for vehicular applications. More specifically, the present disclosure relates to a heated cover for removing condensation, frost, and ice from an optical sensor in a vehicle.

### BACKGROUND

Optical sensors are used for a variety of applications in motor vehicles, such as for advanced driver assistance systems (ADAS). Moisture, such as condensation, frost, and ice, can block transmission of radiation used by such optical sensors, reducing effectiveness of the sensors.

### SUMMARY

The present disclosure provides a heated cover for an optical sensor. The heated cover includes: a substrate configured to overlie the optical sensor; a conductive layer affixed to the substrate overlying a field-of-view (FOV) of the optical sensor and configured to generate heat; and a heater wire attached to the substrate and at least partially surrounding the FOV. Each of the substrate and the conductive layer are transparent at a wavelength of light used by the optical sensor.

The present disclosure also provides a sensor assembly. The sensor assembly includes: an optical sensor; a housing defining an interior chamber for holding the optical sensor; and a heated cover attached the housing and enclosing the interior chamber. The heated cover includes: a substrate overlying the optical sensor; a conductive layer affixed to the substrate and overlying a field-of-view (FOV) of the optical sensor; and a heater wire attached to the substrate and at least partially surrounding the FOV. Each of the substrate and the conductive layer are transparent at a wavelength of light used by the optical sensor.

The present disclosure also provides a method of operating a heated cover for a sensor assembly in a vehicle. The method includes: energizing, while the vehicle is plugged-in to a charger, a heater wire attached to a substrate overlying an optical sensor; and energizing a conductive layer affixed to the substrate overlying a field-of-view (FOV) of the optical sensor to cause the conductive layer to warm the substrate. Each of the substrate and the conductive layer are transparent at a wavelength of light used by the optical sensor.

These and other aspects of the present disclosure are disclosed in the following detailed description of the embodiments, the appended claims, and the accompanying figures

### BRIEF DESCRIPTION OF THE DRAWINGS

Further details, features and advantages of designs of the invention result from the following description of embodiment examples in reference to the associated drawings.
FIG. 1 shows a side view of a vehicle;
FIG. 2 shows a schematic cross-section diagram of a sensor assembly including a heated cover, in accordance with an aspect of the present disclosure;
FIG. 3 shows a perspective partially-transparent exploded view of the heated cover for an optical sensor, in accordance with an aspect of the present disclosure;
FIG. 4 shows a flow chart of steps in a method of operating a heated cover for a sensor assembly in a vehicle, in accordance with some embodiments of the present disclosure.

### DETAILED DESCRIPTION

Referring to the drawings, the present invention will be described in detail in view of following embodiments.

The present disclosure provides a secondary optical sensor cover for seamless integration behind plastic vehicle body panels, e.g. behind fascia, grille, front integration panel etc. The sensor cover can be made of material such as optical- or Lidar-grade Polycarbonate, or other suitable polymers.

Transparent conductive heater film or conductive coating placed in the field-of-view of the sensor (e.g., made of Carbon Nanotubes, Silver Nanowire, Metal Meshes etc.), overmolded, bonded or otherwise suitably affixed to substrate, either on the A-side or B-side of the body panel, optionally with suitable additional protective films, with minimal impact to optical transmission. In conjunction with conventional, (e.g.: tungsten-based) heater wire surrounding the sensor field of view being able to provide a thermal boost to achieve accelerated de-icing before start-up; e.g., while vehicle is plugged into a charger and energy consumption is less critical than during battery operations; wire would be placed on B-side of cover for aesthetic purposes and to enable heat-up of air volume of enclosed sensor housing to prevent quick re-freeze in addition to conductive heating of the cover.

Additionally or alternatively, the heater wire may be integrated into the plastic cover / body panel through suitable molding process steps with minimal impact on A-side aesthetic appearance to improve thermal transfer to the sensing area. Potential aesthetic impacts could be covered by decorative patterns (or similar) in the body panel design. For example, ridges or styling lines may contain and/or cover the wire. Additional styling trim pieces may be disposed over the wire area to cover the wire.

Additional films/coatings may be included to build-up a material stack, including but not limited to: anti-reflective films or coatings, potentially fabricated in conjunction with heater film; anti-soling films or coatings placed on an A-side, enabling water/dirt/contaminant rejection through e.g.: (super)hydrophilic/hydrophobic, omni-/oleophobic etc. properties; protective hard coatings; and/or a combination thereof.

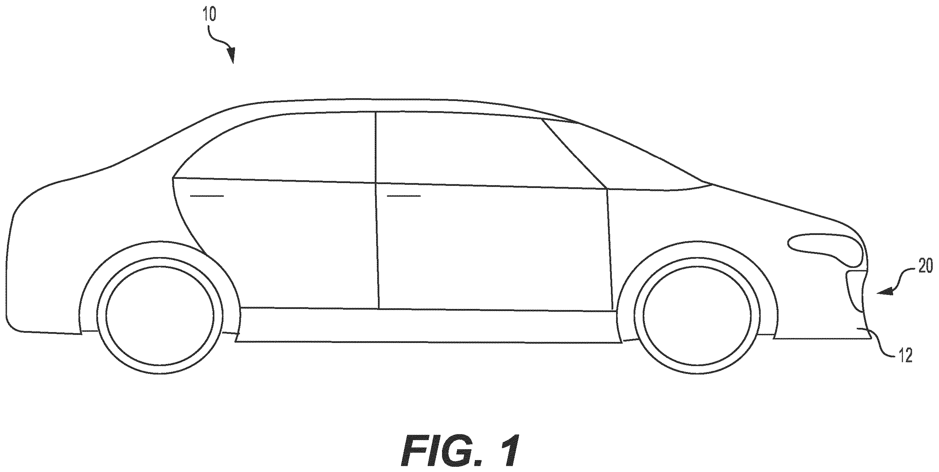

FIG. 1 shows a side view of a vehicle 10 having a front fascia 12 and including a sensor assembly 20. As shown, the sensor assembly 20 is disposed within the front fascia 12, on a front surface of the vehicle 10. However, the sensor assembly 20 may be located in any place on the vehicle 10.

The sensor assembly 20 of the present disclosure may be used in any application that can benefit from de-icing and/or de-fogging functions. The sensor assembly 20 of the present disclosure may be used in land vehicles, such as cars, trucks, busses, trains, trollies, etc. The sensor assembly 20 of the present disclosure may also be used in aircraft or watercraft or in non-vehicle applications. For example, the sensor assembly 20 of the present disclosure may be used in a fixed installation for a traffic monitoring sensor and/or camera or for a security sensor and/or camera.

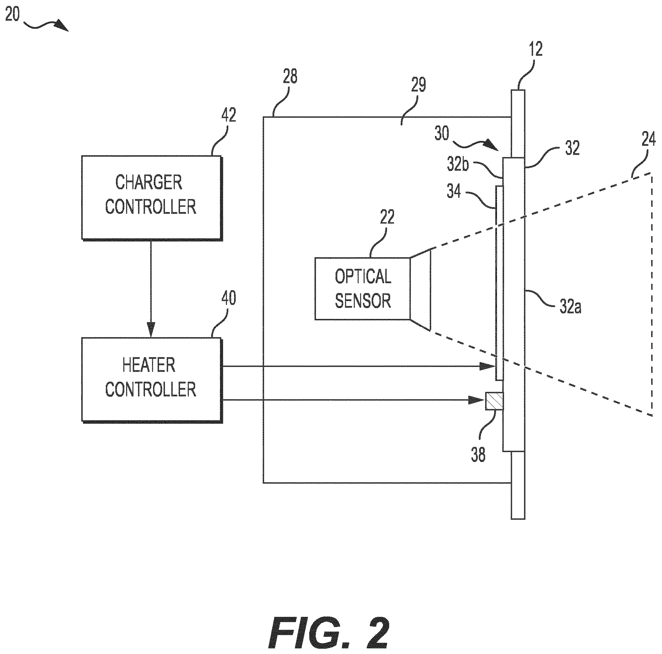

FIG. 2 shows a schematic cross-section diagram of a sensor assembly 20 including a heated cover 30, in accordance with an aspect of the present disclosure. The sensor assembly 20 includes an optical sensor 22, such as a camera or a LIDAR sensor. In some embodiments, the optical sensor 22 may receive visible light. Additionally or alternatively, the optical sensor 22 may sense light in invisible wavelengths, such as infrared (IR) and/or ultraviolet (UV). The optical sensor 22 defines a field-of-view (FOV) 24 across which light is received.

The sensor assembly 20 also includes a housing 28 defining an interior chamber 29 for holding the optical sensor 22. The optical sensor 22 may be located, at least partially, within the interior chamber 29 of the housing 28. In some embodiments, and as shown in FIG. 2, the optical sensor 22 may be located entirely within the interior chamber 29 of the housing 28.

The sensor assembly 20 also includes a heated cover 30 attached the housing 28 and enclosing the interior chamber 29. For example, the heated cover 30 may form one wall of the interior chamber 29. The heated cover 30 includes a substrate 32 that overlies the optical sensor 22. The heated cover 30 also includes a conductive layer 34 that is affixed to the substrate 32 and which overlies the FOV 24 of the optical sensor 22. In other words, and as shown on FIG. 2, the FOV 24 of the optical sensor 22 extends through the substrate 32 and the conductive layer 34. The substrate 32 and the conductive layer 34 are each substantially transparent to light detected by the optical sensor 22. For example, each of the substrate 32 and the conductive layer 34 may be transparent at a wavelength of light used by the optical sensor 22. The conductive layer 34 may generate heat in response to an electrical current being conducted therethrough. The conductive layer 34 may include one or more of: carbon nanotubes, silver nanowire, or a metal mesh. However, other material may be used for the conductive layer 34.

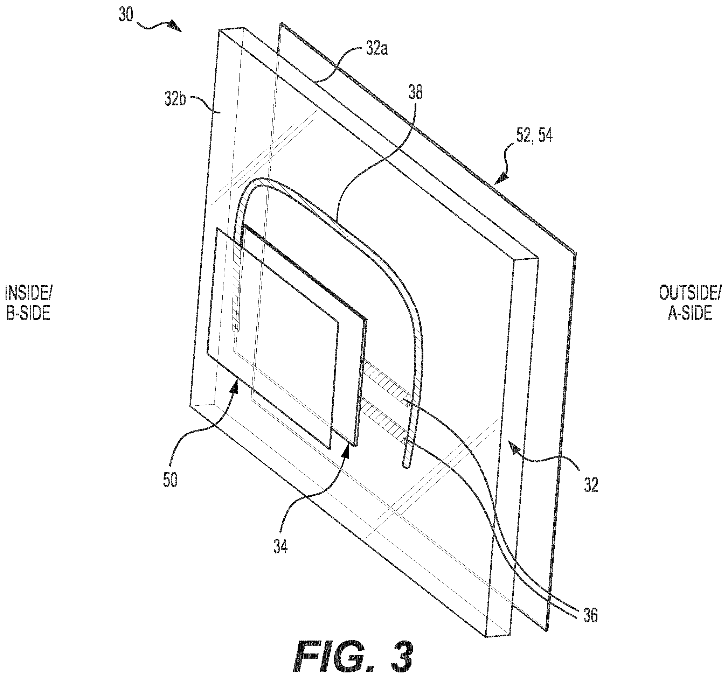

The heated cover 30 also includes a heater wire 38 attached to the substrate 32 and located adjacent to the FOV 24. The heater wire 38 may generate heat when a current is conducted therethrough. The heater wire 38 may be made of a material including Tungsten. However, other material may be used for the heater wire 38. In some embodiments, the heater wire 38 wraps around to surround the FOV 24, at least partially. For example, and as shown on FIG. 3, the heater wire 38 may surround the conductive layer 34 on three sides. However, the heater wire 38 may have another configuration, such as an arrangement that completely surrounds the conductive layer 34. Alternatively, the heater wire 38 may be disposed around the conductive layer 34 on fewer than three sides. In some embodiments, and as shown on FIG. 2, the heater wire 38 may extend below the conductive layer 34. For example, the heater wire 38 may extend across a lower edge of the conductive layer 34.

In some embodiments, the heated cover 30 is configured to be attached to a vehicle. In some embodiments, the heated cover 30 is configured to be seamlessly integrated with a vehicle exterior component. For example, and as shown in FIG. 2, the substrate 32 of the heated cover 30 may be flush with an exterior surface of the front fascia 12. However, this is merely one example, and the heated cover 30 may be recessed behind or otherwise seamlessly integrated with a vehicle exterior component, such as a fascia, a grille, a mirror housing, or another component.

Still referring to FIG. 2, the sensor assembly 20 also includes a heater controller 40 that is configured to supply electrical current to each of the conductive layer 34 and the heater wire 38 for selectively causing each of the conductive layer 34 and the heater wire 38 to generate heat. The heater controller 40 is in functional communication with a charge controller 42 for receiving a signal indicating that the vehicle 10 is plugged-in to a charger.

FIG. 3 shows a perspective partially-transparent exploded view of the heated cover 30. As shown, the substrate 32 has a generally planar shape. However, the substrate 32 may be curved in one or more dimensions. The substrate 32 may be made of polycarbonate. However, the substrate 32 may be made of one or more other materials. The substrate 32 defines an A-side 32a that faces outwardly, away from the optical sensor 22. The substrate 32 also defines a B-side 32b that faces inwardly, toward the optical sensor 22.

The conductive layer 34, which may also be called a transparent heater film, includes two electrical connector tabs 36 attached thereto for conducting electrical current thereto. In some embodiments, and as shown in FIG. 3, the conductive layer 34 is disposed on the B-side 32b of the substrate 32. Alternatively or additionally, the conductive layer 34 may be disposed on the A-side 32a of the substrate 32.

As shown, the heater wire 38 is also disposed on the B-side 32b of the substrate 32 and defines a horseshoe shape that extends around three sides of the conductive layer 34. However, the heater wire 38 may have a different placement and/or configuration.

Additionally or alternatively, the heater wire 38 may be integrated into the substrate 32. For example, the heater wire 38 may be embedded in the substrate 32 using a molding process, which may have with minimal impact on aesthetic appearance of the A-side 32a of the substrate 32. Potential aesthetic impacts could be covered by decorative patterns (or similar) in the body panel design. For example, ridges or styling lines may contain and/or cover the wire. Additional styling trim pieces may be disposed over the wire area to cover the wire.

In some embodiments, and as shown in FIG. 3, the heated cover 30 also includes an anti-reflective coating 50 disposed on the substrate 32. In some embodiments, the anti-reflective coating 50 may be integrally formed with or otherwise combined with the conductive layer 34.

In some embodiments, and as shown in FIG. 3, the heated cover 30 also includes a protective coating 52 disposed on the A-side 32a of the substrate 32. The protective coating 52 may include a hard coating or film that is resilient to damage, such as damage from strikes by bugs or other road debris. The protective coating 52 may protect the substrate 32 from being damaged.

In some embodiments, and as shown in FIG. 3, the heated cover 30 also includes an anti-soiling coating 54 disposed on the A-side 32a of the substrate 32. The anti-soiling coating 54 may include at least one of: a hydrophilic material, a hydrophobic material an oleophobic material or an omniphobic material. However, the anti-soiling coating 54 may include other materials.

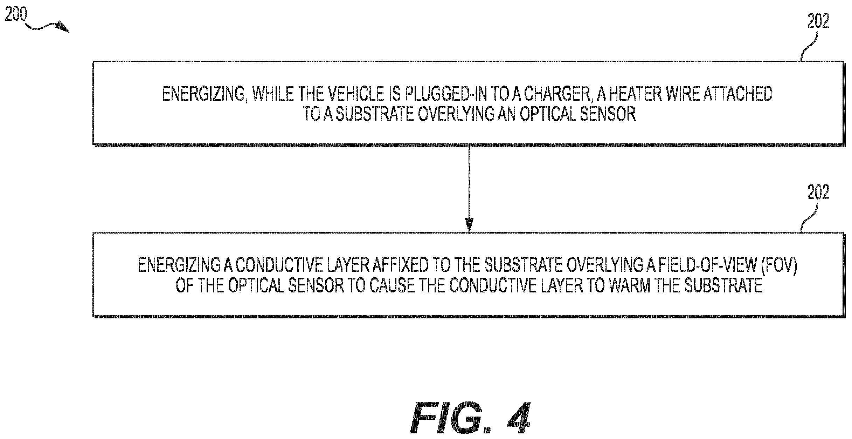

A method 200 of operating a heated cover for a sensor assembly in a vehicle is shown in the flow chart of FIG. 4. The method 200 can be performed by the heater controller 40, in accordance with some embodiments of the present disclosure. As can be appreciated in light of the disclosure, the order of operation within the method is not limited to the sequential execution as illustrated in FIG. 3, but may be performed in one or more varying orders as applicable and in accordance with the present disclosure.

The method 200 includes energizing, at step 202, while the vehicle is plugged-in to a charger, a heater wire attached to a substrate overlying an optical sensor. For example, the heater controller 40 may energize the heater wire 38 when and only when the heater controller 40 receives the signal from the charge controller 42 indicating that the vehicle 10 is plugged-in to a charger. The heater wire 38 may then provide a thermal boost to achieve accelerated de-icing before start-up; e.g., while vehicle is plugged into a charger and energy consumption is less critical than during battery operations; wire would be placed on B-side of cover for aesthetic purposes and to enable heat-up of air within the interior chamber 29 of the housing 28.

The method 200 also includes energizing, at step 204, a conductive layer affixed to the substrate overlying a field-of-view (FOV) of the optical sensor to cause the conductive layer to warm the substrate. For example, the heater controller 40 may energize the conductive layer 34 to cause the conductive layer 34 to warm the substrate 32 for evaporating condensation therefrom and/or for melting ice therefrom. In some embodiments, the heater controller 40 may energize the conductive layer 34 only when necessary to perform the de-fogging and/or de-icing functionality. For example, the heater controller 40 may energize the conductive layer 34 for a predetermined period of time and/or only when ambient temperature is below a predetermined setting. Additionally or alternatively, the heater controller 40 may energize the conductive layer 34 only when the optical sensor 22 detects conditions indicative of condensation and/or ice on the substrate 32. In some embodiments, the conductive layer 34 may also be energized when the heater wire 38 is energized, for example while the vehicle is plugged into a charger.

In some embodiments, each of the substrate and the conductive layer are transparent at a wavelength of light used by the optical sensor.

The system, methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable devices, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors, processor architectures, combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionalities may be integrated into a dedicated, standalone device or other hardware. In another aspect, the means for performing the steps associated with the processes described above may include any of the hardware and/or software described above. All such permutations and combinations are intended to fall within the scope of the present disclosure.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A heated cover for an optical sensor, comprising:
a substrate configured to overlie the optical sensor;
a conductive layer affixed to the substrate overlying a field-of-view (FOV) of the optical sensor and configured to generate heat; and
a heater wire attached to the substrate and at least partially surrounding the FOV,
wherein each of the substrate and the conductive layer are transparent at a wavelength of light used by the optical sensor.

2. The heated cover of Claim 1, wherein the heated cover is configured to be attached to a vehicle.

3. The heated cover of Claim 2, wherein the heated cover is configured to be seamlessly integrated with a vehicle exterior component.

4. The heated cover of any one of Claims 1 to 3, wherein the conductive layer includes at least one of: carbon nanotubes, silver nanowire, or a metal mesh.

5. The heated cover of any one of Claims 1 to 4, wherein the conductive layer is disposed on an A-side of the substrate, wherein the A-side of the substrate faces away from the optical sensor.

6. The heated cover of any one of Claims 1 to 4, wherein the conductive layer is embedded in the substrate or disposed on a B-side of the substrate, wherein the B-side of the substrate faces toward the optical sensor.

7. The heated cover of any one of Claims 1 to 6, wherein the heater wire includes Tungsten; and/or
further comprising an anti-reflective coating disposed on the substrate;
the anti-reflective coating preferably being integrally formed with the conductive layer.

8. The heated cover of any one of Claims 1 to 7, further comprising an anti-soiling coating disposed on an A-side of the substrate, wherein the A-side of the substrate faces away from the optical sensor.

9. The heated cover of Claim 8, wherein the anti-soiling coating includes at least one of: a hydrophilic material, a hydrophobic material an oleophobic material or an omniphobic material.

10. The heated cover of any one of Claims 1 to 9, further comprising a protective coating disposed on an A-side of the substrate, wherein the A-side of the substrate faces away from the optical sensor.

11. A sensor assembly, comprising:
an optical sensor;
a housing defining an interior chamber for holding the optical sensor; and
a heated cover attached the housing and enclosing the interior chamber, the heated cover including:
a substrate overlying the optical sensor;
a conductive layer affixed to the substrate and overlying a field-of-view (FOV) of the optical sensor; and
a heater wire attached to the substrate and located adjacent to the FOV,
wherein each of the substrate and the conductive layer are transparent at a wavelength of light used by the optical sensor.

12. The sensor assembly of Claim 11, wherein the heated cover is configured to be attached to a vehicle;
wherein the heated cover is preferably configured to be seamlessly integrated with a vehicle exterior component.

13. The sensor assembly of Claim 11 or 12, wherein the conductive layer includes at least one of: carbon nanotubes, silver nanowire, or a metal mesh; and/or
wherein the conductive layer is disposed on an A-side of the substrate, wherein the A-side of the substrate faces away from the optical sensor; and/or
wherein the conductive layer is disposed on a B-side of the substrate, wherein the B-side of the substrate faces toward the optical sensor.

14. The sensor assembly of any one of Claims 11 to 13, wherein the heater wire includes Tungsten.

15. A method of operating a heated cover for a sensor assembly in a vehicle, comprising:
energizing, while the vehicle is plugged-in to a charger, a heater wire attached to a substrate overlying an optical sensor; and
energizing a conductive layer affixed to the substrate overlying a field-of-view (FOV) of the optical sensor to cause the conductive layer to warm the substrate,
wherein each of the substrate and the conductive layer are transparent at a wavelength of light used by the optical sensor.
